# EUROPEAN PATENT APPLICATION

(11) **EP 2 339 821 A1**
(43) Date of publication of application: **29.06.2011**
(21) Application number: 10166540.4
(22) Date of filing: 18.06.2010
(51) Int. Cl.: H04N 1/00, H04N 5/445

(54) **Display apparatus and control method thereof**

(30) Priority: 20.11.2009 KR 20090112600
(71) Applicant: Samsung Electronics Co., Ltd., Suwon-si, Gyeonggi-do (KR)
(72) Inventor: Kim, Dae-hyun, Gyeonggi-do (KR); Lee, Chang-soo, Seoul (KR); Lee, Sang-hee, Seoul (KR); Yoon, Yeo-ri, Gyeonggi-do (KR)
(74) Representative: Hewett, Jonathan Michael Richard

(57) **Abstract**

A display apparatus and a control method thereof are disclosed. The display apparatus includes: a display unit; a receiving unit which receives a preset input command; and a control unit which displays an image including a plurality of objects corresponding respectively to preset operations and a selection zone for selection of the objects, moves the selection zone in response to a 4-way up, down, left and right way movement input received by the receiving unit, and displays on the display unit a selection menu which is reconfigured such that at least one of the objects included in the selection zone can be selected according to the 4-way movement input. The control method includes: displaying an image including a plurality of objects corresponding respectively to preset operations and a selection zone for selection of the object; moving the selection zone in response to a 4-way up, down, left and right way movement input; and displaying a selection menu reconfigured such that at least one of the objects included in the selection zone can be selected according to the 4-way movement input.

## Description

The present invention relates to a display apparatus which receives and processes an image signal and displays the processed image signal, and a control method thereof. More particularly, the present invention relates to a display apparatus with a structure for selecting a plurality of objects included in an image, and a control method thereof.

A display apparatus is an apparatus which processes an image signal received from the outside and displays an image based on the processed image signal, and is being implemented in various forms including a TV, a monitor, a portable media player, an electronic frame, or other apparatuses known in the art. For example, a display apparatus such as a TV receives broadcasting signals sent from different broadcasting stations and performs various processes, including tuning, decoding and so on, for the received broadcasting signals, so that a broadcasting program image of any broadcasting channel can be displayed on a display unit.

Such a display apparatus is configured to incorporate a variety of functions, including typical displaying of broadcasting program images. For example, the display apparatus may access a server via a network in order to display a web document of a web site. Such a web document may contain a variety of link items, such as hyper-texts, icons and the like, which may be selected and executed by clicking on either a cursor or a pointer placed thereon. Accordingly, a different web document corresponding to a particular link item may be switchably displayed or preset particular information may be displayed.

However, in the case of a display apparatus such as a TV, it is common that an input device for moving a pointer in an image is limited to a remote controller and it is not easy for a user to select a desired link item through the remote controller. Of course, a separate input device for moving a pointer may be additionally provided for the display apparatus, which results in an increase in apparatus costs.

Accordingly, for a display apparatus with a structure for moving a pointer, by a user through a remote controller, it is desirable to easily select an object such as a link item displayed on an image without a separate input device or an additional hardware configuration.

According to an aspect of the present invention there is provided a display apparatus with a structure for selecting a plurality of objects included in an image, and a control method thereof.

The foregoing and/or other aspects may be achieved by providing a display apparatus including: a display unit; a receiving unit which receives a preset input command; and a control unit which displays an image including a plurality of objects corresponding, respectively, to preset operations and a selection zone for selection of the objects. The control unit moves the selection zone in response to a 4-way up, down, left and right direction movement input received by the receiving unit, and displays on the display unit a selection menu is reconfigured such that at least one of the objects included in the selection zone can be selected according to the 4-way movement input.

The control unit may display the image, which is not divided by a grid, on the display unit.

The control unit may arrange a plurality of sub-objects corresponding respectively to the objects included in the selection zone in the selection menu in a preset arrangement order.

The control unit may change a selection of one of the plurality of sub-objects in response to the 4-way movement input.

The sub-object may include at least one of an icon, a symbol and a text.

The receiving unit may receive the 4-way movement input from a remote controller having a 4-way key corresponding to the 4-way movement and deliver the received 4-way movement input to the control unit.

The control unit may display the selection menu in the form of either a pop-up or a window.

Upon receiving the preset input command from the receiving unit, the control unit may change a pointer displayed on the display unit to the selection zone.

Upon receiving the preset input command from the receiving unit, the control unit may display both the selection zone and a pointer together on the display unit.

The foregoing and/or other aspects may be achieved by providing a control method of a display apparatus, including: displaying an image including a plurality of objects corresponding respectively to preset operations and a selection zone for selection of the objects; moving the selection zone in response to a 4-way up, down, left and right way movement input; and displaying a selection menu reconfigured such that at least one of the objects included in the selection zone can be selected according to the 4-way movement input.

The image including the plurality of objects and the selection zone may be an image which is not divided by a grid.

The displaying of a selection menu may include arranging a plurality of sub objects corresponding respectively to the objects included in the selection zone in the selection menu in a preset arrangement order.

The displaying of a selection menu may include changing a selection of one of the plurality of sub-objects in response to the 4-way movement input.

The sub-object may include at least one of an icon, a symbol and a text.

The moving of the selection zone may include receiving the 4-way movement input from a remote controller having a 4-way key corresponding to the 4-way movement and moving the selection zone.

The displaying of a selection menu may include displaying the selection menu in the form of a pop-up or a window.

The displaying of an image may include changing a previously displayed pointer to the selection zone upon receiving the preset input command.

The displaying of an image may include displaying both the selection zone and a pointer together upon receiving a preset input command.

The above and/or other aspects will become apparent and more readily appreciated from the following description of the exemplary embodiments, taken in conjunction with the accompanying drawings, in which:
FIG. 1 is a block diagram of a configuration of a display apparatus according to a first exemplary embodiment;
FIG. 2 is a view showing an example of display of objects and a pointer in the display apparatus of FIG. 1;
FIG. 3 is a view showing an example of display of a selection zone in the display apparatus of FIG. 2;
FIG. 4 is a view showing an example of display of a selection menu in the display apparatus of FIG. 3;
FIG. 5 is a control flow chart showing a control method of the display apparatus of FIG. 1; and
FIG. 6 is a view showing an example of display of a selection zone according to a second exemplary embodiment.

The display apparatus 1 according to the exemplary embodiments is implemented by a TV but the present invention is not limited thereto. The display apparatus 1 has a structure for moving a pointer displayed on an image in response to manipulation of a 4-way key by a user and may be embodied in various forms of display apparatuses 1, including a portable media player, an electronic frame, a mobile phone, etc., in addition to the TV.

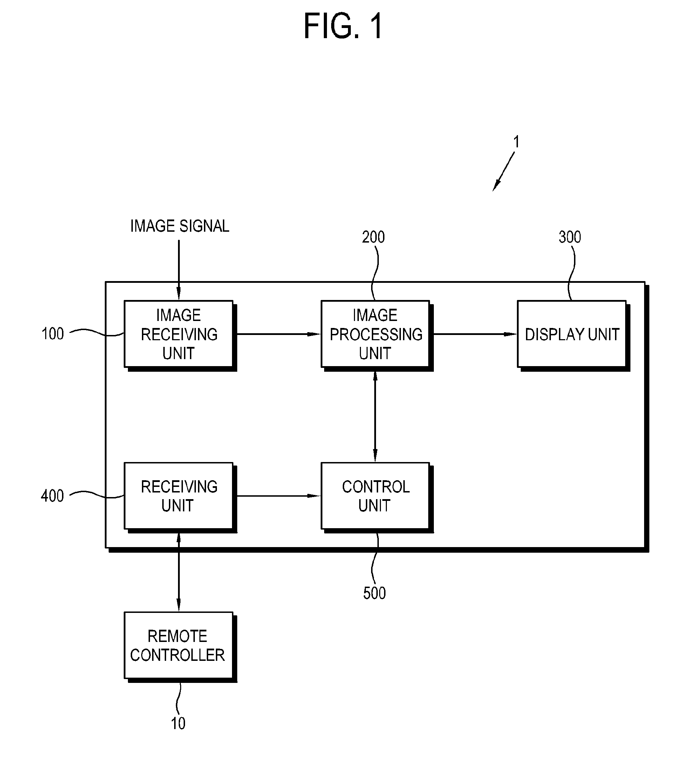

FIG. 1 is a block diagram of a configuration of a display apparatus 1 according to a first exemplary embodiment.

As shown in FIG. 1, the display apparatus 1 of this embodiment displays an image corresponding to an image signal received from the outside and is operated based on input signals from a remote controller 10 manipulated by a user.

The display apparatus 1 includes an image receiving unit 100 which receives an image signal, an image processing unit 200 which processes the image signal received in the image receiving unit 100, a display unit 300 which displays an image corresponding to the image signal processed in the image processing unit 200, a receiving unit 400 which communicates with the remote controller 10, and a control unit 500 which controls the image processing unit 200 based on an input signal received in the receiving unit 400.

The image receiving unit 100 receives the image signal from outside display apparatus 1, and delivers the received image to image processing unit 200. The image receiving unit 100 may receive a radio frequency (RF) signal broadcasted from a broadcasting station (not shown) by wireless communication or may receive a composite video, a component video, a super video or an image signal according to a SCART standard (IEC933-1 standard 21 pin connection) or a high definition multimedia interface (HDMI) standard via a cable. If the received image signal is the RF broadcasting signal, the image receiving unit 100 includes a tuner which tunes the broadcasting signal for each channel.

The image receiving unit 100 may access a certain web site of a server in order to receive a data packet indicating a particular web document therefrom.

The image processing unit 200 performs a variety of preset image processes for the image signal delivered from the image receiving unit 100. The image processing unit 200 outputs the image signal, which was processed in these processes, to the display unit 300 on which an image corresponding to the processed image signal is displayed.

The image processes performed by the image processing unit 200 may include, but is not limited to, for example, decoding, encoding, de-interlacing, frame refresh rate conversion, scaling, noise reduction for improvement of image quality, detail enhancement, etc., corresponding to various image formats. The image processing unit 200 may be implemented as a separate component which can independently perform these processes or may be implemented as an integrated component which integrates various functions.

Upon receiving the data packet indicating the particular web document from the image receiving unit 100, the image processing unit 200 may process the received data packet and display the web document on the display unit 300. In addition, the image processing unit 200 may include a user interface (UI) processing unit (not shown) which generates a variety of selectable user interface (UI) objects to be displayed on display unit 300.

Display unit 300 displays an image processed in image processing unit 200. Display unit 300 may be implemented by, but is not limited to, one of display systems including liquid crystal, plasma, light-emitting diode, organic light-emitting diode, surface-conduction electron-emitter, carbon nano-tube, nano-crystal, and other systems known in the art.

An image displayed on display unit 300 may include, but is not limited to, for example, a broadcasting program image, an electronic program guide (EPG), a web document, an UI, and other applications. Such an image configuration displayed on the display unit 300 is referred to as "object" which may be implemented by an icon, a symbol, a text, etc.

Receiving unit 400 delivers an input signal received from remote controller 10 to control unit 500. Such an input signal may include preset commands intended by a user. Control unit 500 controls the operation of the display apparatus based on these commands.

Receiving unit 400 may receive the input signal from remote controller 10 according to an infrared communication scheme which may be configured in various ways depending on implementation of the remote controller 10. For example, receiving unit 400 may receive the input signal based on a two-way communication scheme such as Zigbee, RF, Bluetooth, etc. In this case, receiving unit 400 may transmit a predetermined signal generated in the display apparatus 1 to remote controller 10.

Control unit 500 controls a variety of processes of image processing unit 200 based on the input signal from receiving unit 400. For example, upon receiving an input signal corresponding to movement of a pointer displayed on display unit 300 from receiving unit 400, control unit 500 controls image processing unit 200 to move the pointer based on the input signal.

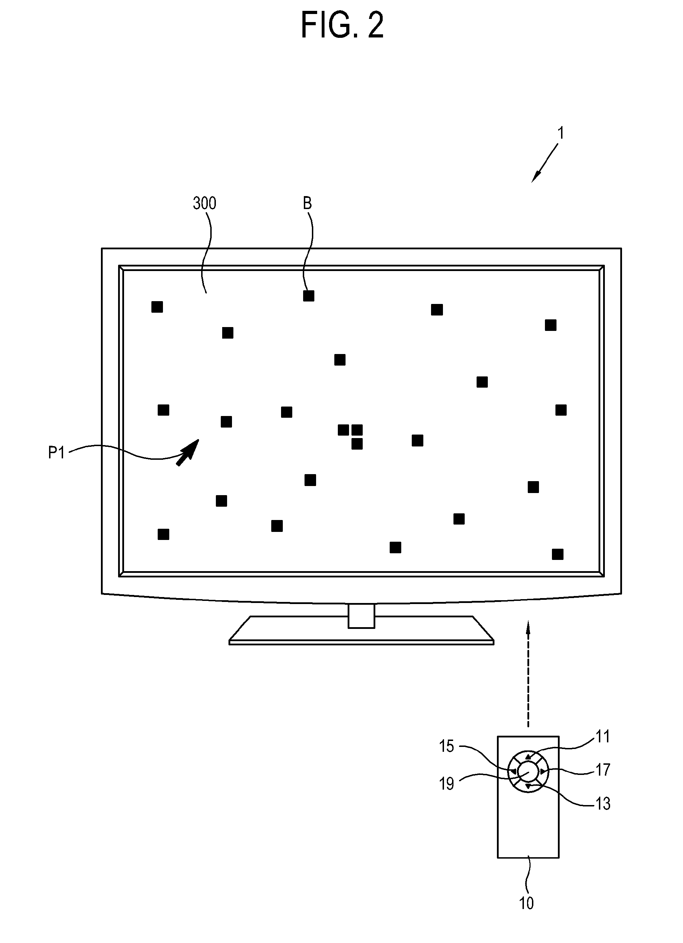

For example, an exemplary embodiment in which the control unit 500 moves a pointer P1 to select an object B according to an input signal from remote controller 10 will be described with reference to FIG. 2. FIG. 2 is a view showing an example of display of a plurality of objects B and pointer P1 on the display unit 300.

As shown in FIG. 2, the plurality of objects B arranged randomly and the movable pointer P1 are displayed as an image on the display unit 300. The image displayed on display unit 300 is not particularly limited. For example, a map of a certain area may be display unit 300 and each object B may be an icon indicating an importance place on the map.

In order for a user to receive information on a particular object B, the pointer has to be located on the particular object B so that the particular object B can be selected and executed. However, if the image on which the object B is displayed is not divided by grids, a group including the object B desired by the user may not be selected for each grid. Accordingly, the user has to move the pointer P1 onto the object B to be selected.

The user manipulates remote controller 10 to move pointer P1 in a desired direction. To this end, remote controller 10 includes 4-way keys 11, 13, 15 and 17 corresponding to 4 up, down, left and right directions and an enter key 19 for selecting an object B.

The 4-way keys 11, 13, 15 and 17 correspond to movement of pointer P1 in the 4 up, down, left and right directions, respectively. If the user pushes one of the 4-way keys, the control unit 500 moves pointer P1 in a direction corresponding to the pushed 4-way key 11, 13, 15 or 17. In this case, whenever the 4-way key 11, 13, 15 or 17 is pushed once, the control unit 500 moves pointer P1 in the corresponding direction by a predetermined reference space. For example, if the user pushes the right key 17 five times, the control unit 500 moves the pointer P1 in the right direction by the reference space five times accordingly.

However, in order to select any object B, the user has to locate the pointer P1 on the object B through manipulation of the 4-way keys 11, 13, 15 and 17, which may be inconvenient to the user.

In addition, since a larger image displayable area of the display unit 300 provides a wider movable area of pointer P1, it may be difficult for the user to move the pointer P1 through the 4-way keys 11, 13, 15 and 17. If the reference space for movement of pointer P1 is made to be small, the number of times by which the user has to push the 4-way keys 11, 13, 15 and 17 to move the pointer P1 increases, which may be inconvenient to the user.

On the other hand, if the reference space for movement of the pointer P1 is made to be large, the pointer P1 may be moved quickly. However, in this case, if the object B is located between one point and another of one-time movement of the pointer P1, it may be difficult to locate the pointer P1 on the object B, which may result in difficulty in selecting the object B. In this manner, the number of objects B which are difficult to be selected increases with the increase in the reference space for movement of pointer P1.

This embodiment is configured such that a selection zone having a predetermined selection range for selection of an object B is displayed, the selection zone is moved to a desired point, and then a selection menu, reconfigured to select the object B included in the selection zone, is displayed. With this configuration, the user can easily select and execute the object B even when the user moves the pointer P1 through the 4-way keys 11, 13, 15 and 17.

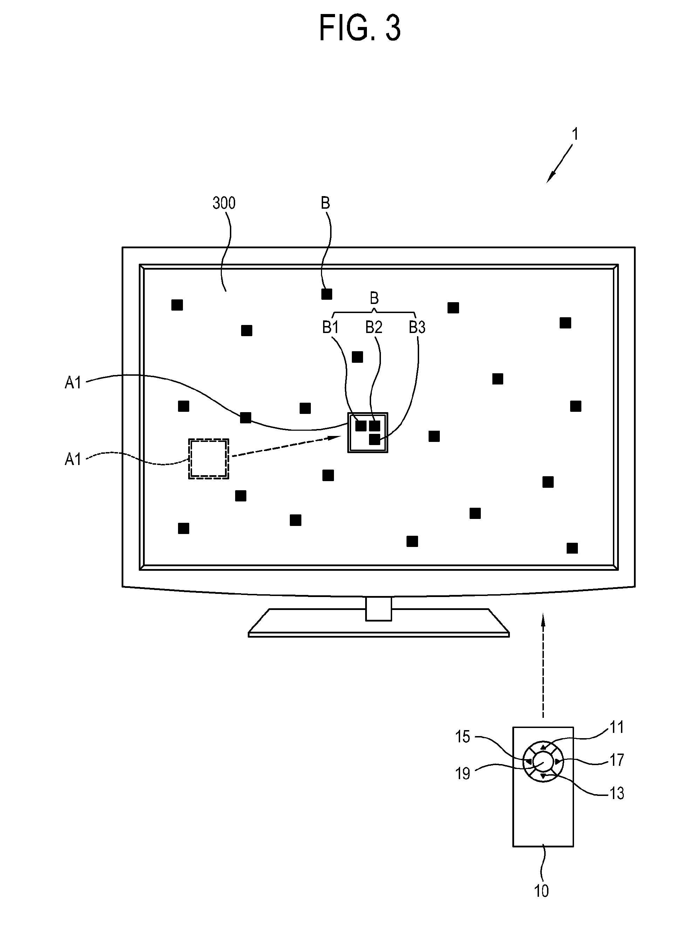

Hereinafter, a configuration of selecting the object B according to this embodiment will be described with reference to FIG. 3. FIG. 3 is a view showing an example of displaying a selection zone At on display unit 300 and moving this selection zone A1.

As shown in FIG. 3, with a plurality of objects B displayed on the display unit 300, the control unit 500 changes the pointer P1 to a selection zone At and displays the selection zone A1. Such display of the selection zone At is achieved by manipulation of the user through remote controller 10.

The control unit 500 moves the selection zone A1 in response to manipulation of the 4-way keys 11, 13, 15 and 17 by the user. Unlike pointer P1, which can select a single object B, selection zone A1 has a predetermined range within which one or more objects B can be selected, thereby allowing selection zone A1 to move faster than pointer P1 can move under the condition of the same number of times by which the 4-way keys 11, 13, 15 and 17 are pushed, if the selection zone were smaller.

The user manipulates the 4-way keys 11, 13, 15 and 17 until selection zone A1 is moved to a point including a desired object B. As shown in FIG. 3, for example, selection zone A1 is moved to the point which includes several objects B1, B2 and B3 within its selection range.

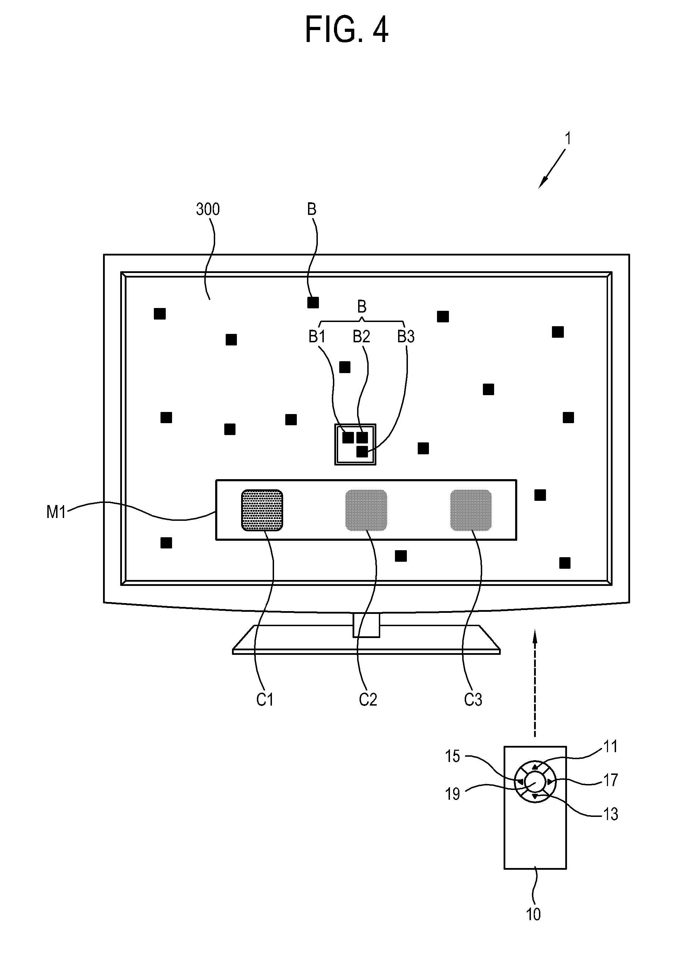

As the selection zone A1 is moved to a point including objects B1, B2 and B3 to be selected, the user pushes enter key 19 to display a selection menu M1 (see FIG. 4).

Hereinafter, a configuration of selecting the objects B1, B2 and B3 on the displayed selection menu M1 will be described with reference to FIG. 4. FIG. 4 is a view showing an example of display of selection menu M1 with regard to objects B1, B2 and B3.

As shown in FIG. 4, selection menu M1 is a menu reconfigured to select the objects B1, B2 and B3 included in selection zone A1 by 4-way movement inputs and may be implemented by a pop-up window or a separate window.

Upon a selection, from remote controller 10, of a menu M1 display command, control unit 500 checks the objects B1, B2 and B3 included in selection zone A1. Control unit 500 causes selection menu M1 to be displayed by arranging sub-objects C1, C2 and C3 corresponding respectively to the objects B1, B2 and B3 included in selection zone At in a predetermined order.

These subobjects C1, C2 and C3 may include, but is not limited to, icons, symbols, texts or other items. FIG. 4 shows an enlarged icon of object B.

If the objects B1, B2 and B3 included in the selection zone are a first object B1, a second object B2 and a third object B3, the control unit 500 displays on the display unit 300, selection menu M1 having a first icon C1 corresponding to the first object B1, a second icon C2 corresponding to the second object B2, and a third icon C3 corresponding to the third object B3.

Control unit 500 displays selection menu M1 with one of the sub-objects C1, C2 and C3 selected and changes such selection as 4-way keys 11, 13, 15 and 17 are pushed. That is, as the 4-way keys 11, 13, 15 and 17 are pushed, control unit 500 changes the selection of one of the sub-objects C1, C2 and C3, so that the user can easily select and execute a desired sub-object C1, C2 or C3.

Selection menu M1, as initially displayed, has first icon C1 selected. If the user pushes the right key 17 once, the second icon C2 is selected. If the user pushes the right key 17 once again, the third icon C3 is selected. If the user pushes the right key 17 once more, the first icon C1 is selected.

If an object B1, B2 or B3, intended to be selected and executed by the user, is the second object B2, when the user pushes the right key 17 once with the selection menu M1 initially displayed, the second icon C2 is selected. In this state, if the user pushes the enter key 19, control unit 500 controls image processing unit 200 (see FIG. 1) to perform an operation set in the second object B2 corresponding to the second icon C2. In this manner, the user can easily select and execute a desired one of the objects B1, B2 and B3 through selection zone At and selection menu M1.

In controlling image processing unit 200 to perform the operation set in second object B2, control unit 500 may cause selection menu M1 not to be displayed without a separate input. In addition, control unit 500 may cause the selection menu M1 to be displayed until a separate input is received.

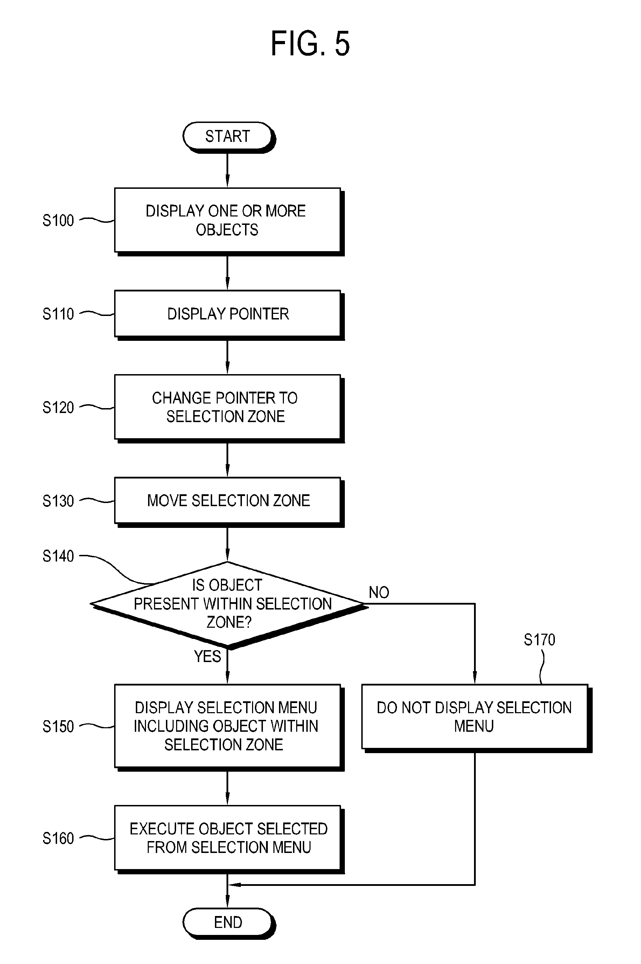

Hereinafter, a control process of the display apparatus 1 according to an exemplary embodiment will be described with reference to FIG. 5. FIG. 5 is a control flow chart showing such a control process.

As shown in FIG. 5, control unit 500 controls image processing unit 200 to display one or more objects B on an image of display unit 300 (S100). Next, control unit 500 causes pointer P1, included in this image, to be displayed (S110).

Upon receiving a predetermined input from the remote controller 10, control unit 500 changes pointer P1 to selection zone A1 (S120). Next, upon receiving a movement input command through 4-way keys 11, 13, 15 and 17, control unit 500 moves selection zone A1 in response to the command (S130).

Upon receiving an input command set to display selection menu M1, control unit 500 determines whether or not objects B are present within selection zone A1 at the current point (S140).

If it is determined that the objects B are present within selection zone A1, control unit 500 displays selection menu M1 reconfigured to include objects B within selection zone A1 (S150). Next, when one of the objects B is selected and executed, control unit 500 controls a corresponding preset operation (S160).

On the other hand, if it is determined that objects B are not present within the selection zone A1, the control unit 500 does not display the selection menu (S170).

In this manner, according to this embodiment, by displaying movable selection zone A1 and selection menu M1 reconfigured to include objects B within selection zone A1, it is possible to easily select and execute objects B desired by the user according to the 4-way movement input from remote controller 10.

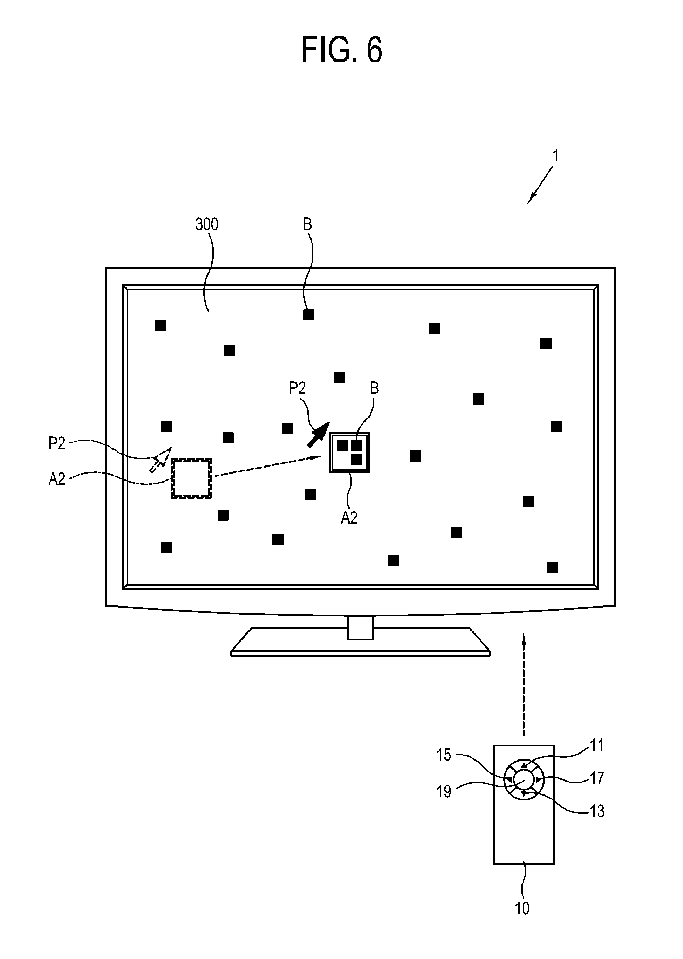

While it has been illustrated in the first exemplary embodiment that the pointer P1 is changed to selection zone A1, the present invention is not limited thereto. Hereinafter, a second exemplary embodiment having a configuration different from that of the first exemplary embodiment will be described with reference to FIG. 6.

FIG. 6 is a view showing an example of display of a selection zone A2 on the display unit according to the second exemplary embodiment.

As shown in FIG. 6, upon receiving a command to display selection zone A2 from the remote controller 10, with a pointer P2 displayed, control unit 500 displays selection zone A2 along with pointer P2. Selection zone P2 may be displayed adjacent to pointer P2, displayed to be arranged around pointer P2, or displayed to be isolated by a predetermined space from pointer P2.

In this state, upon receiving the movement input command through the 4-way keys 11, 13, 15 and 17, control unit 500 moves pointer P2 and the selection zone A2 together in response to the received movement input command.

Displaying selection menu M1 of objects B included in selection zone A2 has substantially the same configuration as that in the first exemplary embodiment, and therefore, explanation thereof is omitted.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
a display unit;
a receiving unit which receives a preset input command; and
a control unit which displays an image including a plurality of objects corresponding respectively to preset operations and a selection zone for selection of the object, moves the selection zone in response to a 4-way up, down, left and right way movement input received by the receiving unit, and displays on the display unit a selection menu reconfigured such that at least one of the objects included in the selection zone can be selected according to the 4-way movement input.

2. The display apparatus according to claim 1, wherein the control unit displays the image, which is not divided by a grid, on the display unit.

3. The display apparatus according to claim 1, wherein the control unit arranges a plurality of sub-objects corresponding respectively to the objects included in the selection zone in the selection menu in a preset arrangement order.

4. The display apparatus according to claim 3, wherein the control unit changes a selection for one of the plurality of sub objects in response to the 4-way movement input.

5. The display apparatus according to claim 3, wherein the sub object is from the group consisting of at least one of an icon, a symbol and a text.

6. The display apparatus according to claim 1, wherein the receiving unit receives the 4-way movement input from a remote controller having a 4-way key corresponding to the 4-way movement and delivers the received 4-way movement input to the control unit.

7. The display apparatus according to claim 1, wherein the control unit displays the selection menu in the form of a pop-up or a window.

8. The display apparatus according to claim 1, wherein, upon receiving the preset input command from the receiving unit, the control unit moves a pointer displayed on the display unit to the selection zone.

9. The display apparatus according to claim 1, wherein, upon receiving the preset input command from the receiving unit, the control unit displays the selection zone and a pointer together on the display unit.

10. A control method of a display apparatus, comprising:
displaying an image including a plurality of objects corresponding respectively to preset operations and a selection zone for selection of the object;
moving the selection zone in response to a 4-way up, down, left and right way movement input; and
displaying a selection menu reconfigured such that at least one of the objects included in the selection zone can be selected according to the 4-way movement input.

11. The control method according to claim 10, wherein the image including the plurality of objects and the selection zone is an image which is not divided by a grid.

12. The control method according to claim 10, wherein the displaying of a selection menu includes arranging a plurality of sub-objects corresponding respectively to the objects included in the selection zone in the selection menu in a preset arrangement order.

13. The control method according to claim 12, wherein the displaying of a selection menu includes changing a selection for one of the plurality of sub objects in response to the 4-way movement input.

14. The control method according to claim 12, wherein the sub-object is from the group consisting of at least one of an icon, a symbol and a text.

15. The control method according to claim 10, wherein the moving of the selection zone includes receiving the 4-way movement input from a remote controller having a 4-way key corresponding to the 4-way movement and moving the selection zone.
